# EUROPÄISCHE PATENTSCHRIFT

(11) **EP 2 340 605 B1**
(45) Veröffentlichungstag und Bekanntmachung des Hinweises auf die Patenterteilung: **26.06.2019**
(21) Anmeldenummer: 09756248.2
(22) Anmeldetag: 16.10.2009
(51) Int. Cl.: H02P 3/12, H02P 3/22

(54) **ANORDNUNG MIT BREMSWIDERSTAND**
ASSEMBLY WITH A BRAKE RESISTOR
AGENCEMENT AVEC UN RÉSISTANCE DE FREINAGE

(30) Priorität: 21.10.2008 DE 102008052545
(43) Veröffentlichungstag der Anmeldung: 06.07.2011
(73) Patentinhaber: SEW-EURODRIVE GmbH & Co. KG, 76646 Bruchsal (DE)
(72) Erfinder: SCHMIDT, Josef, 76676 Graben-Neudorf (DE); SCHÖPFER, Claus, 69168 Wiesloch (DE); KOLLAR, Hans, Jürgen, 76646 Bruchsal (DE); BELLM, Martin, 76689 Karlsdorf-Neuthard (DE)
(86) Internationale Anmeldenummer: PCT/EP2009/007441
(87) Internationale Veröffentlichungsnummer: WO 2010/046062

(56) Entgegenhaltungen:
- EP-A1- 0 450 126
- EP-A1- 0 923 086
- EP-A1- 1 648 007
- DD-A1- 131 987
- DE-A1- 2 541 249
- FR-A1- 2 346 184
- JP-A- 61 189 178
- JP-A- 63 161 886
- US-A- 1 755 564
- US-A- 4 092 577
- US-A1- 2004 183 482

## Beschreibung

Die Erfindung betrifft eine Anordnung mit Bremswiderstand.

Es sind Bremswiderstände bekannt, die eine als Wicklung ausgeführte lange elektrische Leitung aufweisen. Bremswiderstände werden dazu verwendet, die von Elektromotoren im generatorischen Betrieb erzeugte überschüssige Energie in Wärme zu verwandeln und an die Umgebung abzuführen. Zum Schutz gegen Überhitzung ist eine Sollschmelzstelle vorsehbar, so dass ab einer bestimmten kritischen Temperatur der Stromfluss durch die Leitung unterbrochen ist.

Aus der US 4 092 577 A ist ein Schütz bekannt, der mit einem Bremswiderstand in Reihe geschaltet ist und einer Sicherung ähnlich wirkend angesteuert wird.

Aus der EP 1 648 007 B1 ist ein Thermosicherungsschalter für einen Bremswiderstand bekannt.

Aus der JP 63161886 AA ist ein Bremswiderstand bekannt, der aus dem Zwischenkreis eines Umrichters versorgt wird.

Aus der DE 25 41 249 A1 ist eine Anordnung zur Temperaturerfassung bei elektrischen Bremswiderständen bekannt.

Aus der EP 0 923 086 B1 ist ein Schutzelement eines Stromverbrauchers vor Überlastung bekannt.

Aus der JP 61 189 178 AA eine Schutzbeschaltung für einen Bremswiderstand bekannt, bei der ein Schalter in Reihe mit dem Bremswiderstand angeordnet ist.

Aus der DD 131 987 ist eine Schaltung zur stufenlosen Steuerung des Bremswiderstandes einer Gleichstrommaschine bekannt.

Aus der EP 0 450 126 A ist als nächstliegender Stand der Technik eine pulsweitenmodulierte Spannungsbereitstellung für einen Bremswiderstand vorgesehen.

Aus der EP 0 450 126 A1 ist eine Überwachungseinrichtung für eine Pulswiderstandsanordnung eines Spannungszwischenkreises bekannt.

Aus der US 1 755 564 A ist bekannt, bei Überhitzung eines Widerstands ein auf dem Widerstand montierten Bimetallschalter einschalten zu lassen, um den Widerstand zu überbrücken.

Aus der US 2004 / 183482 A1 ist ein elektrischer Adapter für medizizinische Diagnosezwecke bekannt, wobei LEDs als Beleuchtung eingesetzt werden.

Aus der FR 2 346 184 A1 ist eine Schutzschaltung gegen Kurzschluss bekannt.

Der Erfindung liegt daher die Aufgabe zugrunde, den Schutz für den Bremswiderstand zu verbessern.

Erfindungsgemäß wird die Aufgabe bei der Anordnung mit Bremswiderstand, nach den in Anspruch 1 angegebenen Merkmalen gelöst.

Wichtige Merkmale der Erfindung bei der Anordnung mit Bremswiderstand sind, dass der Bremswiderstand mit einer Sicherung in Reihe geschaltet ist,
ein Auslöse-Element einen Schalter umfasst, mit dem ein Teil des Bremswiderstand kurzschließbar ist.

Von Vorteil ist dabei, dass eine eigensichere Anordnung herstellbar wird, die im Fall der Überlastung nur eine ausgefallene Sicherung zur Folge hat, aber keinen ausgefallenen Bremswiderstand. Somit ist im Überlastfall nur ein geringer Kostenaufwand vorhanden und der Bremswiderstand ist wiederverwendbar.

Bei einer vorteilhaften Ausgestaltung ist der Bremswiderstand eigensicher ausgeführt. Von Vorteil ist dabei, dass zwei redundante Sicherheitsmechanismen vorgesehen sind und somit eine hohe Sicherheit, also auch Sicherheitskategorie, erreichbar ist.

Bei einer vorteilhaften Ausgestaltung umfasst der Bremswiderstand ein Wicklung eines metallischen Drahtes oder ist aus einem Halbleitermaterial gefertigt, insbesondere zur Erhöhung der Sicherheit aus einem Halbleitermaterial, dessen Widerstand mit ansteigender Temperatur progressiv abnimmt. Von Vorteil ist dabei, dass der Bremswiderstand schon von seinem Material her sich selbst schützt, also eigensicher aufgebaut ist. Das Kurzschließen des Bremswiderstandes und Auslösen der Sicherung ermöglicht dann somit eine unabhängigen Sicherheit und es ist auf diese Weise eine erhöhte Sicherheitskategorie erreichbar.

Bei einer vorteilhaften Ausgestaltung ist das Auslöse-Element wärmeleitend mit Bremswiderstand verbunden, insbesondere dass das Auslöse-Element einen geringeren Wärmeübergangswiderstand zum Bremswiderstand aufweist als zur Umgebung oder zu anderen Bauteilen. Von Vorteil ist dabei, dass die Temperatur des Auslöse-Elements der Temperatur des Bremswiderstandes möglichst gut folgt und somit das Überschreiten der kritischen Temperaturen rechtzeitig erkennbar ist.

Bei einer vorteilhaften Ausgestaltung umfasst das Auslöse-Element ein Bimetall-Schaltelement, insbesondere einen Bimetallstreifen, ein Thermoklick oder ein Thermorelais. Von Vorteil ist dabei, dass einfache kostengünstige Mittel verwendbar sind.

Bei einer vorteilhaften Ausgestaltung weist das Auslöse-Element einen Meldekontakt auf. Von Vorteil ist dabei, dass eine Vorwarnung herausgebbar ist. Insbesondere ist der Meldekontakt als Öffner ausgeführt, insbesondere wobei das Überschreiten einer ersten kritischen Temperatur meldbar ist. Von Vorteil ist dabei, dass rechtzeitig Maßnahmen einleitbar sind zum Schutz gegen weiteres Ansteigen der Temperatur. Beispielsweise ist der generatorisch betriebene Wechselrichter abschaltbar oder in seiner Leistung reduzierbar. Alternativ ist auch Energie aus dem Zwischenkreis in Form einer zusätzlichen Gleichstromkomponente dem vom Wechselrichter gespeisten Elektromotor zuführbar.

Bei einer vorteilhaften Ausgestaltung schließt das Auslöse-Element den Schalter kurz bei Überschreiten einer zweiten kritischen Temperatur, insbesondere wobei die zweite kritische Temperatur höher als die erste kritische Temperatur ist. Von Vorteil ist dabei, dass nach der Vorwarnung wegen Überschreiten der ersten kritischen Temperatur eine gewisse Restzeit zur Verfügung steht bis die zweite kritische Temperatur überschritten ist.

Bei einer vorteilhaften Ausgestaltung ist die Reihenschaltung aus Bremswiderstand und Sicherung aus einer Versorgungsspannung versorgt, die Zwischenkreisspannung eines Umrichters ist, insbesondere also aus der ein Wechselrichter speisbar ist. Von Vorteil ist dabei, dass überschüssige, in den Zwischenkreis gespeiste Energie abführbar ist an den Bremswiderstand und somit der Umrichter schützbar ist gegen Überspannung, insbesondere gegen derart hohe Zwischenkreisspannung, dass eine Zerstörung der Halbleiterschalter des aus dem Zwischenkreis versorgten Wechselrichters verhinderbar ist.

Bei einer vorteilhaften Ausgestaltung ist ein Mittel zur Überwachung der Versorgungsspannung der Reihenschaltung vorgesehen, das mit einem Mittel zur Abschaltung aus der Versorgungsspannung ebenfalls versorgbarer, generatorisch betreibbarer Komponenten verbunden ist, wobei bei Überschreiten eines kritischen Spannungswertes der Versorgungsspannung die Komponenten abgeschaltet werden. Insbesondere umfassen die Komponenten zumindest eine elektronische Schaltung zur Ansteuerung des Wechselrichters des Umrichters, die im generatorischen Betrieb Energie in den Zwischenkreis rückspeist und somit zur Erhöhung der Versorgungsspannung, insbesondere Zwischenkreisspannung, beitragen kann. Von Vorteil ist dabei, dass die Sicherheit weiter erhöhbar ist.

Bei einer vorteilhaften Ausgestaltung ist die Sicherung nach Auslösen reaktivierbar oder irreversibel verändert. Von Vorteil ist dabei, dass eine kostengünstige passive Sicherung verwendbar ist, die nach Auslösen nur auszutauschen ist.

Bei einer vorteilhaften Ausgestaltung sind Mittel vorgesehen, die ein Einhalten einer Mindest-Abkühlzeit vor Reaktivieren erzwingen. Von Vorteil ist dabei, dass ein Wiederanschalten der Anordnung verhindert ist, solange die Temperatur die zweite kritische Temperatur überschreitet.

Weitere Vorteile ergeben sich aus den Unteransprüchen.

Die Erfindung wird nun anhand von Abbildungen näher erläutert:

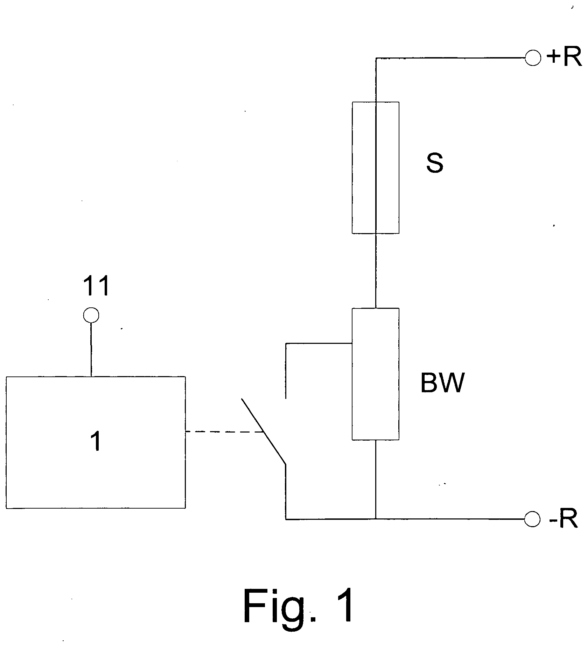

In der Figur 1 ist eine erfindungsgemäße Anordnung gezeigt. Dabei ist ein Bremswiderstand BW mit einer Sicherung S in Reihe geschaltet und aus einer Versorgungsspannung versorgt, welche zwischen dem oberen Potential +R und dem unteren Potential -R anliegt. Die Sicherung ist als Gleichstromsicherung ausgeführt.

Das Auslöse-Element 1 umfasst einen Schalter, der im geschlossenen Zustand die gesamte Wicklung oder einen Teil der Wicklung des Bremswiderstandes kurzschließt.

Der Wicklungsdraht ist ein metallischer Leiter, wie beispielsweise Kupferdraht oder Kupferhaltiger Draht.

Vorzugsweise ist am Auslöse-Element ein Meldekontakt M vorgesehen, der eine Vorwarnung, also Meldung bei drohender Überlast, ausführt. Der Meldekontakt M ist hierzu als Öffner ausgeführt, der bei Überschreiten einer ersten kritischen Temperatur ausgelöst wird.

Das Auslöse-Element 1 ist wärmeleitend mit dem Bremswiderstand BW verbunden. Insbesondere ist also der Wärmeübergangswiderstand zwischen Auslöse-Element 1 und Bremswiderstand BW geringer als zwischen Auslöse-Element und Umgebung oder anderen Komponenten.

Somit folgt die im Auslöse-Element auftretende Temperatur der Temperatur des Bremswiderstandes BW. Das Auslöse-Element 1 ist als Thermorelais oder als Thermoklick ausgeführt. Sobald also eine zweite kritische Temperatur überschritten wird, wird das Auslöse-Element 1 ausgelöst, also der Schalter geschlossen.

Das Kurzschließen des Bremswiderstandes oder eines Teils des Bremswiderstands bewirkt einen Anstieg des Stromes so, dass die Sicherung S ausgelöst wird. Auf diese Weise wirkt der hohe Strom nur für sehr kurze Zeit, nämlich die Ansprechzeit der Sicherung S und der Bremswiderstand ist geschützt.

Bei weiteren erfindungsgemäßen Ausführungsbeispielen ist im Auslöse-Element ein Bimetallstreifen vorgesehen, der unterhalb einer ersten Temperatur an einem ersten Kontakt anliegt, insbesondere mit seiner ersten Seite, und der oberhalb dieser ersten Temperatur nicht mehr an diesem ersten Kontakt, also dem Meldekontakt, anliegt. Bei Überschreiten der zweiten kritischen Temperatur liegt die andere Seite des Bimetallstreifens an dem zweiten Kontakt an und ermöglicht somit den Kurzschluss des gesamten Bremswiderstandes BW oder des Teiles des Bremswiderstandes BW.

Bei weiteren erfindungsgemäßen Ausführungsbeispielen ist die Versorgungsspannung Zwischenkreisspannung eines Umrichters. Diese wird durch einen netzgespeisten Gleichrichter erzeugt und dient in erster Linie zur Speisung eines Wechselrichters, aus dem der vom Umrichter zu speisende Elektromotor versorgt ist. Vorzugsweise liegt die Zwischenkreisspannung an einem Kondensator, dem Zwischenkreiskondensator, an, so dass dieser zur Glättung der Zwischenkreisspannung zumindest beitragen kann. Da im generatorischen Betrieb mittels des Wechselrichters Energie an den Zwischenkreis rückspeisbar ist, ist eine Spannungsüberwachung des Zwischenkreises vorgesehen, die bei überschreiten eines kritischen Spannungswertes eine sicherheitsgerichtete Aktion ausführt, wie beispielsweise eine Warninformation anzeigen, eine Fehlerinformation anzeigen oder den Wechselrichter abschalten. Der kritische Spannungswert ist dabei derart gewählt, dass bei dieser Spannung der daraus versorgte Bremswiderstand zumindest die zweite kritische Temperatur noch nicht überschreitet. Vorzugsweise überschreitet er bei dieser Spannung noch nicht einmal die erste kritische Temperatur. Diese Wahl der kritischen Spannungs- und Temperaturwerte ermöglicht also ein redundantes Abschalten des Umrichters aufgrund physikalisch völlig verschiedener Prinzipien.

Bei weiteren erfindungsgemäßen Ausführungsbeispielen ist als Versorgungsspannung auch eine Wechselspannung vorsehbar, wobei dann die Sicherung S als Wechselstromsicherung ausgeführt ist.

Bei weiteren erfindungsgemäßen Ausführungsbeispielen ist der Bremswiderstand BW aus Halbleitermaterial ausgeführt, das als Bahn angeordnet ist. Auch hier ist bei Erreichen der kritischen Temperatur ein Kurzschließen analog zu Figur 1 ausführbar.

Bei weiteren erfindungsgemäßen Ausführungsbeispielen sind verschiedene Sorten von Sicherungen verwendet. Einerseits ist beispielsweise eine nach Auslösen irreversibel veränderliche Sicherung verwendet, wie beispielsweise ein durchgebrannter Draht, oder eine wiederverwendbare Sicherung, die reaktivierbar ist, beispielsweise durch Betätigen eines Eingabemittels, wie Schiebeschalter, Druckschalter oder Druckknopf. Wichtig ist bei der Betätigung, dass die Abkühlzeit für das Auslöse-Element verstrichen ist, also das Auslöse-Element zumindest die zweite kritische Temperatur unterschritten hat. Vorzugsweise sollte auch das Unterschreiten der ersten kritischen Temperatur erreicht sein. In Weiterbildung ist auch eine elektronische Schaltung zusätzlich vorsehbar, die das Einhalten der Abkühlzeit erzwingt, also ein Reaktivieren der Sicherung verhindert während dieser Abkühlzeit.

### Bezugszeichenliste

1 Auslöse-Element
BW Bremswiderstand
M Meldekontakt
S Sicherung

+R oberes Potential der Versorgungsspannung
-R unteres Potential der Versorgungsspannung

## Patentansprüche

1. Anordnung mit einem Bremswiderstand (BW), wobei der Bremswiderstand (BW) mit einer Sicherung (S) in Reihe geschaltet ist, ein Auslöse-Element einen Schalter umfasst, der parallel zu einem Teil des Bremswiderstands (BW) angeordnet ist und mit dem somit ein Teil des Bremswiderstands (BW) kurzschließbar ist, so dass mittels des Kurzschließens ein Anstieg des Stromes durch die Sicherung (S) bewirkt ist, die zum Auslösen der Sicherung (S) führt, wobei das Auslöse-Element wärmeleitend mit dem Bremswiderstand (BW) verbunden ist, so dass das Auslöse-Element einen geringeren Wärmeübergangswiderstand zum Bremswiderstand (BW) aufweist als zur Umgebung oder zu anderen Bauteilen,
wobei das Auslöse-Element ein Bimetall-Schaltelement, insbesondere einen Bimetallstreifen, ein Thermoklick oder ein Thermorelais, umfasst.

2. Anordnung nach Anspruch 1,
**dadurch gekennzeichnet, dass**
der Bremswiderstand eigensicher ausgeführt ist.

3. Anordnung nach mindestens einem der vorangegangenen Ansprüche,
**dadurch gekennzeichnet, dass**
der Bremswiderstand ein Wicklung eines metallischen Drahtes umfasst oder aus einem Halbleitermaterial gefertigt ist, insbesondere zur Erhöhung der Sicherheit aus einem Halbleitermaterial, dessen Widerstand mit ansteigender Temperatur progressiv abnimmt.

4. Anordnung nach mindestens einem der vorangegangenen Ansprüche,
**dadurch gekennzeichnet, dass**
das Auslöse-Element einen Meldekontakt aufweist.

5. Anordnung nach mindestens einem der vorangegangenen Ansprüche,
**dadurch gekennzeichnet, dass**
der Meldekontakt als Öffner ausgeführt ist, insbesondere wobei das Überschreiten einer ersten kritischen Temperatur meldbar ist.

6. Anordnung nach mindestens einem der vorangegangenen Ansprüche,
**dadurch gekennzeichnet, dass**
das Auslöse-Element den Schalter kurzschließt bei Überschreiten einer zweiten kritischen Temperatur, insbesondere wobei die zweite kritische Temperatur höher als die erste kritische Temperatur ist.

7. Anordnung nach mindestens einem der vorangegangenen Ansprüche,
**dadurch gekennzeichnet, dass**
die Reihenschaltung aus Bremswiderstand und Sicherung aus einer Versorgungsspannung versorgt ist, die Zwischenkreisspannung eines Umrichters ist, aus der ein Wechselrichter speisbar ist.

8. Anordnung nach mindestens einem der vorangegangenen Ansprüche,
**dadurch gekennzeichnet, dass**
ein Mittel zur Überwachung der Versorgungsspannung der Reihenschaltung vorgesehen ist, das mit einem Mittel zur Abschaltung aus der Versorgungsspannung ebenfalls versorgbarer, generatorisch betreibbarer Komponenten verbunden ist, wobei bei Überschreiten eines kritischen Spannungswertes der Versorgungsspannung die Komponenten abgeschaltet werden,
insbesondere wobei die Komponenten zumindest eine elektronische Schaltung zur Ansteuerung des Wechselrichters des Umrichters umfassen, die im generatorischen Betrieb Energie in den Zwischenkreis rückspeist und somit zur Erhöhung der Versorgungsspannung, insbesondere Zwischenkreisspannung, beitragen kann.

9. Anordnung nach mindestens einem der vorangegangenen Ansprüche,
**dadurch gekennzeichnet, dass**
die Sicherung nach Auslösen reaktivierbar ist oder irreversibel verändert.

10. Anordnung nach mindestens einem der vorangegangenen Ansprüche,
**dadurch gekennzeichnet, dass**
Mittel vorgesehen sind, die ein Einhalten einer Mindest-Abkühlzeit vor Reaktivieren erzwingen.

## Claims

1. Assembly having a braking resistor (BW), wherein the braking resistor (BW) is connected in series with a fuse (S), a trip element comprises a switch which is arranged in parallel with a portion of the braking resistor (BW) and by which therefore a portion of the braking resistor (BW) can be short-circuited such that, by means of the short-circuiting, an increase in the current through the fuse (S) is brought about, which leads to the fuse (S) being tripped, wherein the trip element is connected to the braking resistor (BW) in a heat-conductive manner such that the trip element has a lower heat transfer resistance to the braking resistor (BW) than to the surrounding environment or to other components, wherein the trip element comprises a bimetal switching element, in particular a bimetal strip, a thermocouple or a thermal relay.

2. Assembly according to claim 1,
**characterized in that**
the braking resistor is configured in an intrinsically safe manner.

3. Assembly according to at least one of the preceding claims,
**characterized in that**
the braking resistor comprises a metal wire winding or is made of a semiconductor material, in particular, in order to increase the safety, of a semiconductor material having a resistance that progressively decreases as the temperature increases.

4. Assembly according to at least one of the preceding claims,
**characterized in that**
the trip element has a signalling contact.

5. Assembly according to at least one of the preceding claims,
**characterized in that**
the signalling contact is configured as an opener, in particular wherein the exceeding of a first critical temperature can be signalled.

6. Assembly according to at least one of the preceding claims,
**characterized in that**
the trip element short-circuits the switch when a second critical temperature is exceeded, in particular wherein the second critical temperature is higher than the first critical temperature.

7. Assembly according to at least one of the preceding claims,
**characterized in that**
the series circuit consisting of braking resistor and fuse is supplied from a supply voltage which is the DC link voltage of a converter, that is to say from which an inverter can be fed.

8. Assembly according to at least one of the preceding claims,
**characterized in that**
a means for monitoring the supply voltage of the series circuit is provided, which is connected to a means for switching off generatively operable components that can likewise be supplied from the supply voltage, wherein the components are switched off when a critical voltage value of the supply voltage is exceeded, in particular wherein the components comprise at least one electronic circuit for actuating the inverter of the converter, which circuit in the generative mode feeds energy back into the DC link circuit and thus can help to increase the supply voltage, in particular the DC link voltage.

9. Assembly according to at least one of the preceding claims,
**characterized in that**
the fuse, after being tripped, can be reactivated or changes irreversibly.

10. Assembly according to at least one of the preceding claims,
**characterized in that**
means are provided which make it necessary to observe a minimum cooling time prior to reactivation.

## Revendications

1. Agencement comportant une résistance de freinage (BW),
dans lequel la résistance de freinage (BW) est couplée en série avec un fusible (S),
un élément de déclenchement comprend un commutateur qui est disposé en parallèle à une partie de la résistance de freinage (BW) et avec lequel une partie de la résistance de freinage (BW) peut ainsi être court-circuitée,
de sorte que, au moyen du court-circuitage, on provoque une augmentation du courant à travers le fusible (S) qui entraîne le déclenchement du fusible (S),
dans lequel l'élément de déclenchement est relié de manière thermoconductrice à la résistance de freinage (BW), de sorte que l'élément de déclenchement présente une résistance au transfert de chaleur plus faible par rapport à la résistance de freinage (BW) que par rapport à l'environnement ou à d'autres composants,
dans lequel l'élément de déclenchement comprend un élément de commutation bimétallique, en particulier un bilame, un déclencheur thermique ou un relais thermique.

2. Agencement selon la revendication 1,
**caractérisé en ce que**
la résistance de freinage est réalisée à sécurité intrinsèque.

3. Agencement selon au moins l'une des revendications précédentes,
**caractérisé en ce que**
la résistance de freinage comprend un enroulement d'un fil métallique ou est réalisée dans un matériau semi-conducteur, en particulier, pour augmenter la sécurité, dans un matériau semi-conducteur dont la résistance diminue progressivement lorsque la température augmente.

4. Agencement selon au moins l'une des revendications précédentes,
**caractérisé en ce que**
l'élément déclencheur présente un contact de signalisation.

5. Agencement selon au moins l'une des revendications précédentes,
**caractérisé en ce que**
le contact de signalisation est réalisé sous la forme d'un contact de repos, en particulier le dépassement d'une première température critique pouvant être signalé.

6. Agencement selon au moins l'une des revendications précédentes,
**caractérisé en ce que**
l'élément de déclenchement court-circuite le commutateur lorsqu'une deuxième température critique est dépassée, la deuxième température critique étant en particulier supérieure à la première température critique.

7. Agencement selon au moins l'une des revendications précédentes,
**caractérisé en ce que**
le couplage en série de la résistance de freinage et du fusible est alimenté par une tension d'alimentation qui est la tension de circuit intermédiaire d'un variateur, c'est-à-dire à partir de laquelle un onduleur peut être alimenté.

8. Agencement selon au moins l'une des revendications précédentes,
**caractérisé en ce**
**qu'**il est prévu un moyen pour surveiller la tension d'alimentation du couplage en série, lequel moyen est relié à un moyen pour déconnecter des composants qui peuvent fonctionner comme générateur et peuvent également être alimentés par la tension d'alimentation, les composants étant déconnectés quand une valeur de tension critique de la tension d'alimentation est dépassée,
en particulier dans lequel les composants comprennent au moins un circuit électronique pour commander l'onduleur du variateur qui, en fonctionnement comme générateur, renvoie de l'énergie dans le circuit intermédiaire et peut ainsi contribuer à l'élévation de la tension d'alimentation, en particulier de la tension de circuit intermédiaire.

9. Agencement selon au moins l'une des revendications précédentes,
**caractérisé en ce que**
le fusible est réactivable ou modifié de manière irréversible après déclenchement.

10. Agencement selon au moins l'une des revendications précédentes,
**caractérisé en ce**
**qu'**il est prévu des moyens qui forcent le respect d'un temps de refroidissement minimal avant réactivation.
